# EUROPEAN PATENT SPECIFICATION

(11) **EP 2 577 131 B1**
(45) Date of publication and mention of the grant of the patent: **17.10.2018**
(21) Application number: 11721414.8
(22) Date of filing: 17.05.2011
(51) Int. Cl.: F16K 31/126

(54) **SPRING SEAT FOR USE WITH ACTUATORS**
FEDERSITZ FÜR AKTOREN
SIÈGE DE RESSORT DESTINÉ À ÊTRE UTILISÉ AVEC DES ACTIONNEURS

(30) Priority: 24.05.2010 US 786078
(43) Date of publication of application: 10.04.2013
(73) Proprietor: Emerson Process Management Regulator Technologies, Inc., McKinney, TX 75070 (US)
(72) Inventor: VASQUEZ, Ernesto, McKinney TX 75070 (US); DAAKE, Sheryl, Lynne, McKinney TX 75070 (US)
(74) Representative: Bohnenberger, Johannes
(86) International application number: PCT/US2011/036851
(87) International publication number: WO 2011/149718

(56) References cited:
- WO-A1-99/05409
- DE-A1- 2 114 548
- DE-A1- 10 107 115
- DE-A1-102007 032 873
- DE-C- 888 633
- GB-A- 843 199
- GB-A- 1 491 931
- US-A- 2 950 739
- US-A- 4 942 899

## Description

### FIELD OF THE DISCLOSURE

The present disclosure relates generally to actuators and, more particularly, to a spring seat for use with actuators.

### BACKGROUND

Process control systems typically employ actuators to control or position fluid valves or regulators. Many of these actuators include a return spring, pre-load spring, bias spring, or the like to achieve a desired operational characteristic. For example, some pneumatic actuators used with pressure reducing fluid regulators include a spring that is preloaded via an adjusting screw to set an output pressure of the regulator.

Generally, the springs used in process control actuators are captured between spring seats. In the case of a coil spring, each end of the spring engages a respective spring seat. Spring seats for coil springs typically function to prevent the springs from sliding laterally relative to their longitudinal axes. Further, in some known actuators, one or both of the spring seats capturing a coil spring may be guided seats that tilt relative to a longitudinal axis of the spring to allow the spring seat(s) to remain fully engaged with the end coils on the spring regardless of the orientation and/or deformation (e.g., lateral deflection) of the spring coils.

### Patent Literature

Patent Document 1: US Patent Application Publication
US 4,942,899 A

Patent Document 1 discloses a fluid pressure regulator designed with a removable cartridge in which all of the wetted parts of the regulator which are subject to wear by the fluid may be removed from the housing of the regulator without detaching the housing from the plumbing to which it is attached. The valve and valve actuator are designed so as to encourage relatively high velocity fluid flow there through so as to prevent clogging and settling of material therein. The valve actuator is also designed to produce divergent flow outwardly to the diaphragm perimeter preventing clogging and setting of material therein.

### SUMMARY

According to the invention, a spring seat configuration as defined in independent claim 1 is provided. Advantageous further developments of the spring seat configuration according to the invention are set forth in the subclaims.

### BRIEF DESCRIPTION OF THE DRAWINGS

FIG. 1 illustrates an example actuator implementing an example spring seat described herein.
FIG. 2 depicts a more detailed cross-sectional view of the example spring seat of FIG. 1.
FIGS. 3A and 3B depict an example adjusting screw that may be used with the example spring seat described herein.
FIGS. 4A and 4B depict an alternative adjusting screw that may be used with the example spring seat described herein.

### DETAILED DESCRIPTION

The example spring seat described herein may be used with actuators (e.g., process control actuators) having coil springs for spring return functionality, diaphragm biasing, etc. Known process control actuators typically include an upper and a lower spring seat to capture a coil spring. One of the spring seats (e.g., a lower spring seat) may be fixed to a diaphragm or other operator while the other spring seat (e.g., an upper spring seat) may be coupled to an adjusting device that enables the spring seat to be moved along the longitudinal axis of the spring to adjust a compression height and, thus, load on the spring. During operation, the end of the spring coupled to the spring seat that is fixed to the diaphragm may move with the diaphragm toward and/or away from the spring seat coupled to the adjuster, thereby further compressing the spring or allowing the spring to expand.

In the case where the spring seat coupled to the adjusting device is a guided-type spring seat, this spring seat can tilt relative to the longitudinal axis of the spring. Thus, the longitudinal axis of this spring seat may not be coaxial or even parallel to the longitudinal axis of the spring or the direction of travel of the spring during compression/expansion of the spring. Such tilting of the spring seat can cause the spring to buckle (i.e., the central axis of its coils to curve), which can result in excessive wear or damage to the actuator. For example, in implementations where the coil spring is surrounded by a spring casing, such buckling may cause the spring to contact the inner wall of the casing. Contact between the coil spring and the spring casing inner wall may result in wearing and, thus, thinning of the casing wall, misalignment of other components of the actuator and/or a valve coupled to the actuator, set pressure shift, and/or generally degraded control performance.

In contrast to the above-described known spring seat configurations, the example spring seat configuration described herein fixes the ends of an actuator coil spring such that a longitudinal axis of the example spring seat is held substantially fixed (e.g., parallel or coaxial) relative to a longitudinal axis of the spring casing and the spring. Thus, with the example spring seat described herein, the orientation of the ends of a coil spring may be substantially fixed relative to a longitudinal axis of a spring casing, the direction of travel (e.g., compression/expansion) of the spring, and an adjusting screw or the like. In other words, the example spring seat described herein substantially prevents or reduces tilting of the spring seat relative to the direction of travel of the spring, the adjusting screw, etc. Such a substantial reduction or prevention of tilting of the spring seat substantially prevents or reduces buckling of the coil spring, thereby eliminating the aforementioned problems associated with excessive coil spring buckling.

More specifically, as described in further detail below, the example spring seat described herein provides an aperture that is sized to receive an end of an adjuster such as an adjusting screw. The aperture is sufficiently deep and closely toleranced to substantially prevent tilting movement of the spring seat relative to a longitudinal axis of the adjusting screw. For example, a slight interference fit or minimal clearance may be used between the aperture of the spring seat and the end of the adjuster.

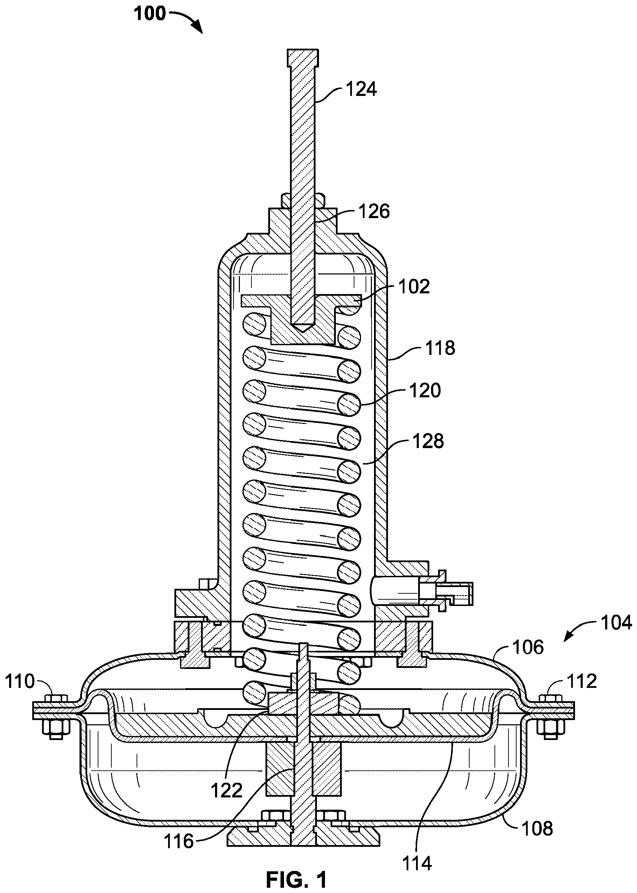

FIG. 1 illustrates an example actuator 100 implementing an example spring seat 102 described herein. The example actuator 100 includes a diaphragm casing 104 having a first casing portion 106 coupled to a second casing portion 108 via fasteners 110 and 112. The casing portions 106 and 108 capture a diaphragm 114 that is operatively coupled to an actuator rod 116. The example actuator 100 also includes a spring casing 118 that houses a coil spring 120, which is captured between the example spring seat 102 and another spring seat 122 coupled to the diaphragm 114. An adjuster or adjusting screw 124 is threadably engaged with a threaded aperture 126 of the spring casing 118 so that rotation of the adjusting screw 124 moves the example spring seat 102 toward or away from the other spring seat 122 to compress or expand the spring 120 a desired amount.

In operation, the actuator rod 116 is operatively coupled to a fluid valve (e.g., a fluid regulator valve) (not shown) and the adjusting screw 124 is turned to set a desired output pressure. During operation, the actuator rod 116 may move upward and downward (in the orientation shown in FIG. 1) to maintain the desired output pressure. Such movement of the actuator rod 116 may further compress the spring 120 and/or allow the spring 120 to expand. In contrast to the above-described known spring seat configurations and as described in greater detail below, the example spring seat 102 engages with the adjusting screw 124 in a manner that substantially prevents or reduces any tilting of the spring seat 102 relative to a longitudinal axis of the adjusting screw 124, the spring case 118, and the spring 120. As a result, the example spring seat 102 substantially prevents or reduces any buckling of the spring 120 (i.e., curvature of the central axis of the coils of the spring 120), thereby preventing the spring 120 from contacting an inner wall 128 of the spring case 118 during operation of the actuator 100.

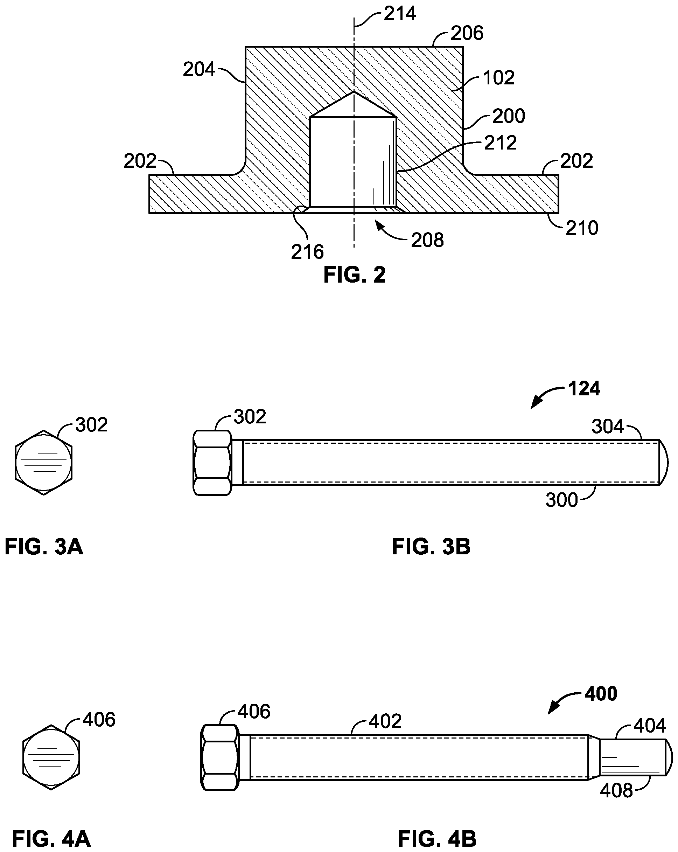

FIG. 2 depicts a more detailed cross-sectional view of the example spring seat 102 of FIG. 1. The example spring seat 102 has a cylindrically-shaped body 200, which may be formed of a metallic material (e.g., a steel, carbon steel, stainless steel, etc.) via any desired process(es) such as machining, casting, forging, or any combination thereof. The body 200 may be substantially unitary (i.e., one-piece) as depicted in FIG. 2 or, alternatively, may be made of multiple parts joined or fastened together in any desired manner. The body 200 includes a shoulder 202 that is sized and configured to receive an end of the coil spring 120 (FIG. 1) as depicted in FIG. 1. The body 200 also includes a guide or boss 204 that projects away from the shoulder 202 toward a surface 206 of the body 200. The boss 204 is centrally disposed on the body 200 and sized to fit within an inner diameter of the coil spring 120 as depicted in FIG. 1. Thus, the boss or guide 204 functions, at least in part, to limit or prevent lateral movement of the end of the coil spring 120 relative to the adjusting screw 124 and the spring casing 118 and, thus, functions to retain the end of the coil spring 120 (FIG. 1) in engagement with the shoulder 202.

The body 200 of the example spring seat 102 also includes an aperture 208 in a surface 210 of the body 200 opposite the surface 206. The aperture 208 is dimensioned to receive an end of the adjusting screw 124 (FIG. 1) such that a wall 212 of the aperture 208 engages the adjusting screw 124 to substantially fix a longitudinal axis 214 of the body 200 relative to a longitudinal axis of the adjusting screw 124 and a longitudinal axis of the spring 120, thereby substantially preventing or reducing any tilting of the body 200 about the longitudinal axis 214 and/or any buckling of the spring 120 (FIG. 1). The aperture 208 may further include a chamfer or lead-in surface 216 to facilitate passage of the end of the adjusting screw 124 into the aperture 208. In this example, the aperture 208 is not threaded (e.g., the wall 212 is relatively smooth). However, in other examples, the aperture 208 could include a particular surface texture or finish, if desired.

FIGS. 3A and 3B depict the example adjusting screw 124 that may be used with the example spring seat 102 described herein. The example adjusting screw 124 includes a threaded shaft 300 and a head 302, which is depicted in this example as a hex-shaped head, but which could alternatively be any other shape. Thus, with the example adjusting screw 124 as depicted in FIGS. 3A and 3B, a threaded end 304 of the adjusting screw 124 may be slidably received by the aperture 208 (FIG. 2) of the example spring seat 102 (FIG. 2).

FIGS. 4A and 4B depict an alternative adjusting screw 400 that may be used with the example spring seat 102 (FIG. 2) described herein. The alternative adjusting screw 400 includes a threaded shaft portion 402, a reduced diameter portion 404 and a head 406. The reduced diameter portion 404 is not threaded and, thus, may provide a relatively smooth outer surface. Thus, an unthreaded end 408 of the adjusting screw 400 may be slidably received by the aperture 208 of the example spring seat 102 (FIG. 2). The unthreaded, reduced diameter portion 404 may be employed to prevent damage to threads (e.g., portions of the threads of the adjusting screw 124 near the end 304 (FIG. 3)) that may forcibly contact the wall 212 of the aperture 208 (FIG. 2) and become deformed. Such deformation of the threads may make removal of the adjusting screw 124 from the spring casing 118 difficult. The example adjusting screws 124 and 400 may be made of any suitable metallic material including, for example, a steel, carbon steel, stainless steel, etc.

Regardless of whether the example adjusting screw 124 or the alternative example adjusting screw 400 is used, the aperture 208 is sized so that movement of the longitudinal axis 214 (FIG. 2) of the spring seat 102 relative to the longitudinal axes of the adjusting screws 214 or 400 is substantially prevented or reduced. In other words, with the example spring seat 102 and the example adjusting screws 124 and 400, the longitudinal axis 214 is substantially fixed in a coaxial or at least parallel relationship to the longitudinal axes of the adjusting screws 124 and 400. More specifically, the aperture 208 may be sized to provide a slight interference fit or, alternatively, a minimal clearance fit with the ends 304 and 408 of the adjusting screws 124 and 400, respectively.

While the example spring seat 102 is described in connection with a pneumatic actuator for use with pressure reducing regulator assemblies, the teachings of the provided example may be more generally applied for use with other types of actuators and/or fluid valves. Also, while the example spring seat 102 is depicted in the orientation of FIG. 1 as an upper spring seat, the example spring seat 102 could be used in other locations, orientations, etc. within an actuator. Further, while the example spring seat 102 is described as having a generally cylindrical body, any other shape(s) or geometry (e.g., polygonal) may be used instead. Still further, while the example spring seat 102 is described as having an unthreaded aperture for receiving an adjusting screw, the aperture could, alternatively, include suitable threads for threadably engaging an adjusting screw.

Additionally, while the example spring seat 102 includes a single aperture that engages an adjusting screw to prevent tilting movement of the spring seat and buckling of the spring, other manners of guiding the movement of a spring seat to prevent tilting of the spring seat could be employed instead of or in addition to the example aperture and adjusting screw configuration. For example, the spring casing may include one or more protrusions extending inwardly to engage respective slots or other features of the spring seat to force the spring seat to move substantially only along the longitudinal axis of the spring casing (i.e., prevent tilting of the spring seat). Alternatively or additionally, the protrusion(s) may be part of the spring seat and the inner wall of the spring casing may include one or more guide channels, rails, etc. to receive or engage the protrusions to guide the movement of the spring seat to be substantially only along the longitudinal axis of the spring casing.

Although certain example apparatus have been described herein, the scope of coverage of this patent is not limited thereto. On the contrary, this patent covers all apparatus and articles of manufacture fairly falling within the scope of the appended claims.

## Claims

1. A spring seat configuration for use with a pneumatic actuator (100), the configuration comprising:
an adjusting screw (124, 400) having an end (304, 408);
a spring seat (102) having a cylindrically- shaped body (200), the body comprising:
a shoulder (202) to receive an end of a coil spring (120);
a boss (204) projecting away from the shoulder toward a first surface (206) of the body, wherein the boss is centrally disposed on the body and sized to fit within an inner diameter of the coil spring; and
an aperture (208) in a second surface (210) of the body opposite the first surface, wherein the aperture is configured to receive the end of the adjusting screw such that a wall (212) of the aperture engages the adjusting screw to substantially fix a longitudinal axis (214) of the body relative to a longitudinal axis of the adjusting screw and a longitudinal axis of the spring,
wherein the aperture comprises a lead-in (216) surface to facilitate passage of the adjusting screw into the aperture, and
**characterized in that**,
the wall of the aperture is either: (a) threaded to threadably engage the threaded end of the adjusting screw, or (b) dimensioned to form an interference fit with the end of the adjusting screw, such that the wall of the aperture engages the adjusting screw to substantially reduce tilting of the body or buckling of the coil spring.

2. The spring seat configuration according to claim 1, when option (b) of claim 1 is used, wherein the aperture is sized to receive an end of the adjusting screw, wherein the end of the adjusting screw does not have threads.

3. The spring seat configuration according to any of the preceding claims, wherein the boss is substantially unitary.

4. The spring seat configuration according to any of the preceding claims, wherein the boss is centrally disposed on the body.

5. The spring seat configuration according to any of the preceding claims, wherein the body is unitary and comprises a metallic material.

6. The spring seat configuration according to claim 5, wherein the metallic material comprises steel.

7. The spring seat configuration according to any of the preceding claims, further comprising one or more protrusions configured to engage one or more guide channels of a spring casing (118) of the pneumatic actuator to guide a movement of the spring seat.

8. The spring seat configuration according to any one of claims 1 through 7, further comprising one or more slots configured to engage one or more inwardly extending protrusions of a spring casing (118) of the pneumatic actuator to guide a movement of the spring seat.

9. A pneumatic actuator, comprising:
a diaphragm (114);
a diaphragm casing (104) having a first casing portion (106) and a second casing portion (108) coupled to the first casing portion, wherein the first and second casing portions capture the diaphragm;
a spring casing (118) coupled to the diaphragm casing (106);
the adjusting screw of claim 1;
the spring seat of claim 1, wherein the spring seat is arranged in the spring casing;
another spring seat (122) coupled to the diaphragm (114);
an actuator rod (116) operatively coupled to the diaphragm (114); and
a coil spring (120) captured between the spring seat (102) and the another spring seat (122).

## Patentansprüche

1. Federsitzkonfiguration zum Gebrauch mit einem pneumatischen Aktuator (100), wobei die Konfiguration aufweist:
eine Justierschraube (124, 400), die ein Ende (304, 408) hat;
einen Federsitz (102), der einen zylindrisch geformten Grundkörper (200) hat, wobei der Grundkörper aufweist:
eine Schulter (202), um ein Ende einer Schraubenfeder (120) aufzunehmen;
einen Vorsprung (204), der von der Schulter weg zu einer ersten Oberfläche (206) des Grundkörpers vorsteht, wobei der Vorsprung zentral auf dem Körper angeordnet und derart bemessen ist, dass er in einen Innendurchmesser der Schraubenfeder passt; und
eine Öffnung (208) in einer zweiten Oberfläche (210) des Grundkörpers gegenüber der ersten Oberfläche, wobei die Öffnung dazu konfiguriert ist, das Ende der Justierschraube aufzunehmen derart, dass eine Wandung (212) der Öffnung im Eingriff mit der Justierschraube steht, um im Wesentlichen eine Längsachse (214) des Grundkörpers relativ zu einer Längsachse der Schraubenfeder und einer Längsachse der Feder zu fixieren,
wobei die Öffnung eine Einführoberfläche (216) aufweist, um den Durchgang der Justierschraube in die Öffnung zu erleichtern, und
**dadurch gekennzeichnet, dass**
die Wandung der Öffnung entweder (a) mit einem Gewinde versehen ist, um im Gewindeeingriff mit dem Gewinde-Ende der Justierschraube zu stehen, oder (b) derart dimensioniert ist, dass sie eine Presspassung mit dem Ende der Justierschraube bildet, derart, dass die Wandung der Öffnung im Eingriff mit der Justierschraube steht, um im Wesentlichen eine Neigung des Grundkörpers oder eine Buckelbildung der Schraubenfeder zu reduzieren.

2. Federsitzkonfiguration nach Anspruch 1, wenn Option (b) von Anspruch 1 genutzt wird, wobei die Öffnung derart bemessen ist, dass sie ein Ende der Justierschraube aufnimmt, wobei das Ende der Justierschraube keine Gewindegänge hat.

3. Federsitzkonfiguration nach einem der vorangehenden Ansprüche, wobei der Vorsprung im Wesentlichen unitär ist.

4. Federsitzkonfiguration nach einem der vorangehenden Ansprüche, wobei der Vorsprung zentral auf dem Grundkörper angeordnet ist.

5. Federsitzkonfiguration nach einem der vorangehenden Ansprüche, wobei der Grundkörper unitär ist und ein metallisches Material aufweist.

6. Federsitzkonfiguration nach Anspruch 5, wobei das metallische Material Stahl aufweist.

7. Federsitzkonfiguration nach einem der vorangehenden Ansprüche, weiter aufweisend einen oder mehrere Vorsprung oder Vorsprünge, der/die konfiguriert ist/sind, um mit einem oder mehreren Führungskanal bzw. Führungskanälen eines Federgehäuses (118) des pneumatischen Aktuators in Eingriff zu stehen, um eine Bewegung des Federsitzes zu führen.

8. Federsitzkonfiguration nach einem der Ansprüche 1-7, weiter aufweisend einen oder mehrere Schlitz/e, dazu konfiguriert, mit einem oder mehreren sich einwärts erstreckenden Vorsprung bzw. Vorsprüngen eines Federgehäuses (118) des pneumatischen Aktuators im Eingriff zu stehen, um eine Bewegung des Federsitzes zu führen.

9. Pneumatischer Aktuator, aufweisend:
ein Membran (114);
ein Membrangehäuse (104), welches einen ersten Gehäuseabschnitt (106) und einen zweiten Gehäuseabschnitt (108) hat, der mit dem ersten Gehäuseabschnitt verbunden ist, wobei der erste und zweite Gehäuseabschnitt die Membran einschließen;
ein Federgehäuse (118), welches mit dem Membrangehäuse (106) verbunden ist;
die Justierschraube nach Anspruch 1;
den Federsitz nach Anspruch 1, wobei der Federsitz im Federgehäuse angeordnet ist;
einen weiteren Federsitz (122), der mit der Membran (114) verbunden ist;
eine Aktuatorstange (116), die wirkungsmäßig mit der Membran (114) verbunden ist; und
eine Schraubenfeder (120), die zwischen dem Federsitz (102) und dem weiteren Federsitz (122) eingeschlossen ist.

## Revendications

1. Configuration de siège de ressort à utiliser avec un actionneur pneumatique (100), la configuration comprenant :
une vis d'ajustement (124, 400) ayant une extrémité (304, 408) ;
un siège de ressort (102) ayant un corps de forme cylindrique (200), le corps comprenant :
un épaulement (202) pour recevoir une extrémité d'un ressort hélicoïdal (120) ;
un bossage (204) qui se projette en éloignement de l'épaulement vers une première surface (206) du corps, dans lequel le bossage est disposé au centre sur le corps et de taille propre à se loger dans un diamètre intérieur du ressort hélicoïdal ; et
une ouverture (208) dans une seconde surface (210) du corps à l'opposé de la première surface, dans lequel l'ouverture est configurée pour recevoir l'extrémité de la vis d'ajustement de telle façon qu'une paroi (212) de l'ouverture engage la vis d'ajustement afin de sensiblement fixer un axe longitudinal (214) du corps par rapport à un axe longitudinal de la vis d'ajustement et à un axe longitudinal du ressort,
dans lequel l'ouverture comprend une surface d'entrée (216) pour faciliter le passage de la vis d'ajustement entrant dans l'ouverture, et
**caractérisée en ce que**
la paroi de l'ouverture est :
(a) soit taraudée pour engager par vissage l'extrémité filetée de la vis d'ajustement,
(b) soit dimensionnée pour former un engagement à interférence avec l'extrémité de la vis d'ajustement, de telle façon que la paroi de l'ouverture engage la vis d'ajustement afin de réduire sensiblement un basculement du corps ou un flambage du ressort hélicoïdal.

2. Configuration de siège de ressort selon la revendication 1, dans laquelle, quand l'option (b) de la revendication 1 est utilisée, l'ouverture a une taille propre à recevoir une extrémité de la vis d'ajustement, et l'extrémité de la vis d'ajustement ne présente pas de filetage.

3. Configuration de siège de ressort selon l'une quelconque des revendications précédentes,
dans laquelle le bossage est sensiblement unitaire.

4. Configuration de siège de ressort selon l'une quelconque des revendications précédentes,
dans laquelle le bossage est disposé au centre sur le corps.

5. Configuration de siège de ressort selon l'une quelconque des revendications précédentes,
dans laquelle le corps est unitaire et comprend un matériau métallique.

6. Configuration de siège de ressort selon la revendication 5, dans laquelle le matériau métallique comprend de l'acier.

7. Configuration de siège de ressort selon l'une quelconque des revendications précédentes,
comprenant en outre une ou plusieurs projections configurées pour engager un ou plusieurs canaux de guidage d'un boîtier à ressort (118) de l'actionneur pneumatique afin de guider un mouvement du siège de ressort.

8. Configuration de siège de ressort selon l'une quelconque des revendications 1 à 7,
comprenant en outre une ou plusieurs fentes configurées pour engager une ou plusieurs projections, s'étendant vers l'intérieur, d'un boîtier à ressort (118) de l'actionneur pneumatique afin de guider un mouvement du siège de ressort.

9. Actionneur pneumatique, comprenant :
un diaphragme (114) ;
un boîtier de diaphragme (104) ayant une première portion de boîtier (106) et une seconde portion de boîtier (108) couplée à la première portion de boîtier, dans lesquelles la première et la seconde portion de boîtier capturent le diaphragme ;
un boîtier de ressort (118) couplé au boîtier de diaphragme (106) ;
la vis d'ajustement de la revendication 1 ;
le siège de ressort de la revendication 1, ledit siège de ressort étant agencé dans le boîtier de ressort ;
un autre siège de ressort (122) couplé au diaphragme (114) ;
une tige d'actionneur (116) fonctionnellement couplée au diaphragme (114) ; et
un ressort hélicoïdal (120) capturé entre le siège de ressort (102) et l'autre siège de ressort (122).
